(19) Europäisches Patentamt
European Patent Office
Office européen des brevets

(11) **EP 4 601 251 A1**

(12) **EUROPEAN PATENT APPLICATION**

(43) Date of publication:
**13.08.2025 Bulletin 2025/33**

(21) Application number: **25155103.2**

(22) Date of filing: **30.01.2025**

(51) International Patent Classification (IPC):
*H04L 25/03* (2006.01)          *H04L 25/02* (2006.01)

(52) Cooperative Patent Classification (CPC):
**H04L 25/03159; H04L 25/022; H04L 25/0224**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.02.2024 GB 202401586**

(71) Applicant: **Nokia Technologies Oy**
**02610 Espoo (FI)**

(72) Inventors:
• **KIILERICH PRATAS, Nuno Manuel**
**9220 Aalborg (DK)**

• **BARBU, Oana-Elena**
**9220 Aalborg (DK)**
• **VEJLGAARD, Benny**
**9260 Gistrup (DK)**
• **HARREBEK, Johannes**
**9000 Aalborg (DK)**
• **SVENDSEN, Simon**
**9000 Aalborg (DK)**

(74) Representative: **Page White Farrer**
**Bedford House**
**21a John Street**
**London WC1N 2BF (GB)**

(54) **APPARATUS, METHOD, AND COMPUTER PROGRAM**

(57) The disclosure relates to an apparatus configured to: receive, from a device, a response signal to an activation signal over a channel; generate a first vector in a time domain including samples of the response signal; perform a transformation of the first vector in the time domain to obtain a second vector $y_i$ in a frequency domain including pilot symbols and data symbols; estimate a channel response $H_i$ of the channel based on the pilot symbols; equalize the data symbols based on the channel response $H_i$; determine a waveform of the response signal, from among a plurality of waveforms the apparatus is configurable to handle, based on configuration information; and process the equalized data symbols based on the determined waveform.

1300 Apparatus may receive, from a device, a response signal to an activation signal over a channel

1302 Apparatus may generate a first vector in a time domain including samples of the response signal

1304 Apparatus may perform a transformation of the first vector in the time domain to obtain a second vector $y_i$ in a frequency domain including pilot symbols and data symbols

1306 Apparatus may estimate a channel response $H_i$ of the channel based on the pilot symbols

1308 Apparatus may equalize the data symbols based on the channel response $H_i$

1310 Apparatus may determine a waveform of the response signal from among a plurality of waveforms the apparatus is configurable to handle based on configuration information

1312 Apparatus may process the equalized data symbols based on the waveform

Fig. 13

EP 4 601 251 A1

**Description**

Field of the disclosure

The present disclosure relates to an apparatus, a method, and a computer program for managing a device (e.g., ambient Internet of things device), in a communication system.

Background

A communication system can be seen as a facility that enables communication sessions between two or more entities such as communication devices, base stations and/or other nodes by providing carriers between the various entities involved in the communications path.

The communication system may be a wireless communication system. Examples of wireless systems comprise public land mobile networks (PLMN) operating based on radio standards such as those provided by 3GPP, satellite based communication systems and different wireless local networks, for example wireless local area networks (WLAN). The wireless systems can typically be divided into cells, and are therefore often referred to as cellular systems.

The communication system and associated devices typically operate in accordance with a given standard or specification which sets out what the various entities associated with the system are permitted to do and how that should be achieved. Communication protocols and/or parameters which shall be used for the connection are also typically defined. Examples of standard are the so-called 5G standards.

Summary

According to an aspect there is provided an apparatus comprising at least one processor and at least one memory storing instructions that, when executed by the at least one processor, cause the apparatus at least to: receive, from a device, a response signal to an activation signal over a channel; generate a first vector in a time domain including samples of the response signal; perform a transformation of the first vector in the time domain to obtain a second vector $y_i$ in a frequency domain including pilot symbols and data symbols; estimate a channel response $H_i$ of the channel based on the pilot symbols; equalize the data symbols based on the channel response $H_i$; determine a waveform of the response signal, from among a plurality of waveforms the apparatus is configurable to handle, based on configuration information; and process the equalized data symbols based on the determined waveform.

The activation signal may trigger the device to transmit the response signal.

The response signal may be dependent on the activation signal. The response signal may be a backscattered ( i.e., reflected) modulation of the activation signal.

The device may be an active device. The response signal may be independent from the activation signal. The response signal may not be a backscattered ( i.e., reflected) modulation of the activation signal.

The pilot symbols may be mapped to pilot subcarriers. The data symbols may be mapped to data subcarriers.

The at least one memory may store instructions that, when executed by the at least one processor, cause the apparatus at least to: sample the response signal to generate cyclic prefix samples and remaining samples; and delete the cyclic prefix samples; and the first vector may include the remaining samples.

Determining a waveform of the response signal may comprise: determining that a waveform of the response signal comprise a first waveform; and processing the data symbols based on the determined waveform may comprise: demodulating the equalized data symbols to obtain demodulated and equalized data symbols.

The first waveform may comprise orthogonal frequency division multiplexing.

The first waveform may comprise cyclic prefix orthogonal frequency division multiplexing.

Determining a waveform of the response signal may comprise: determining that a waveform of the response signal is a second waveform; and processing the data symbols based on the determined waveform may comprise: performing an inverse digital Fourier transformation of the equalized data symbols to obtain inverse digital Fourier transformed and equalized data symbols; and demodulating the inverse digital Fourier transformed and equalized data symbols to obtain demodulated, inverse digital Fourier transformed and equalized data symbols.

The second waveform may comprise digital Fourier transform spread frequency division multiplexing.

Processing the data symbols based on the determined waveform may comprise: decoding the demodulated and equalized data symbols to obtain data; or decoding the demodulated, inverse digital Fourier transformed and equalized data symbols to obtain data.

The configuration information may be received from a base station.

The configuration information may be received from the device.

The configuration information may comprise an explicit indication of the waveform of the response signal.

The configuration information may comprise an implicit indication of the waveform of the response signal.

The implicit indication of the waveform of the response signal may comprise a device type.

A device type may comprise a device type A, a device type B or a device type C.

The apparatus may be a reader.

The reader may be a user equipment.

The reader may be a base station.

The transformation may be a digital Fourier transformation.

The device may be an Internet of things device.

The device may be a passive device or an active device.

According to an aspect there is provided an apparatus comprising means for: receiving, from a device, a response signal to an activation signal over a channel; generating a first vector in a time domain including samples of the response signal; performing a transformation of the first vector in the time domain to obtain a second vector $y_i$ in a frequency domain including pilot symbols and data symbols; estimate a channel response $H_i$ of the channel based on the pilot symbols; equalizing the data symbols based on the channel response $H_i$; determining a waveform of the response signal, from among a plurality of waveforms the apparatus is configurable to handle, based on configuration information; and processing the equalized data symbols based on the determined waveform.

According to an aspect there is provided an apparatus comprising circuitry configured to: receive, from a device, a response signal to an activation signal over a channel; generate a first vector in a time domain including samples of the response signal; perform a transformation of the first vector in the time domain to obtain a second vector $y_i$ in a frequency domain including pilot symbols and data symbols; estimate a channel response $H_i$ of the channel based on the pilot symbols; equalize the data symbols based on the channel response $H_i$; determine a waveform of the response signal, from among a plurality of waveforms the apparatus is configurable to handle, based on configuration information; and process the equalized data symbols based on the determined waveform.

According to an aspect there is provided a method comprising: receiving, from a device, a response signal to an activation signal over a channel; generating a first vector in a time domain including samples of the response signal; performing a transformation of the first vector in the time domain to obtain a second vector $y_i$ in a frequency domain including pilot symbols and data symbols; estimate a channel response $H_i$ of the channel based on the pilot symbols; equalizing the data symbols based on the channel response $H_i$; determining a waveform of the response signal, from among a plurality of waveforms the apparatus is configurable to handle, based on configuration information; and processing the equalized data symbols based on the determined waveform.

The method may be performed by an apparatus.

The activation signal may trigger the device to transmit the response signal.

The response signal may be dependent on the activation signal. The response signal may be a backscattered ( i.e., reflected) modulation of the activation signal.

The device may be an active device. The response signal may be independent from the activation signal. The response signal may not be a backscattered ( i.e., reflected) modulation of the activation signal.

The pilot symbols may be mapped to pilot subcarriers. The data symbols may be mapped to data subcarriers.

The method may comprise: sampling the response signal to generate cyclic prefix samples and remaining samples; and deleting the cyclic prefix samples; and the first vector may include the remaining samples.

Determining a waveform of the response signal may comprise: determining that a waveform of the response signal comprise a first waveform; and processing the data symbols based on the determined waveform may comprise: demodulating the equalized data symbols to obtain demodulated and equalized data symbols.

The first waveform may comprise orthogonal frequency division multiplexing.

The first waveform may comprise cyclic prefix orthogonal frequency division multiplexing.

Determining a waveform of the response signal may comprise: determining that a waveform of the response signal is a second waveform; and processing the data symbols based on the determined waveform may comprise: performing an inverse digital Fourier transformation of the equalized data symbols to obtain inverse digital Fourier transformed and equalized data symbols; and demodulating the inverse digital Fourier transformed and equalized data symbols to obtain demodulated, inverse digital Fourier transformed and equalized data symbols.

The second waveform may comprise digital Fourier transform spread frequency division multiplexing.

Processing the data symbols based on the determined waveform may comprise: decoding the demodulated and equalized data symbols to obtain data; or decoding the demodulated, inverse digital Fourier transformed and equalized data symbols to obtain data.

The configuration information may be received from a base station.

The configuration information may be received from the device.

The configuration information may comprise an explicit indication of the waveform of the response signal.

The configuration information may comprise an implicit indication of the waveform of the response signal.

The implicit indication of the waveform of the response signal may comprise a device type.

A device type may comprise a device type A, a device type B or a device type C.

The apparatus may be a reader.

The reader may be a user equipment.

The reader may be a base station.

The transformation may be a digital Fourier transformation.

The device may be an Internet of things device.

The device may be a passive device or an active device.

According to an aspect there is provided a computer program comprising computer executable code which when run on at least one processor is configured to: receive, from a device, a response signal to an activation signal over a channel; generate a first vector in a time domain including samples of the response signal; perform a transformation of the first vector in the time domain to obtain a second vector $y_i$ in a frequency domain including pilot symbols and data symbols; estimate a channel response $H_i$ of the channel based on the pilot symbols; equalize the data symbols based on the channel response $H_i$; determine a waveform of the response signal, from among a plurality of waveforms the apparatus is configurable to handle, based on configuration information; and process the equalized data symbols based on the determined waveform.

According to an aspect there is provided an apparatus comprising at least one processor and at least one memory storing instructions that, when executed by the at least one processor, cause the apparatus at least to: receive, from a base station, control information comprising an indication of a first frequency resource for transmitting, to a device, an activation signal and an indication of a second frequency resource for transmitting, to a reader, a response signal, wherein the first frequency resource is at least partially different from the second frequency resource; and transmit, to the device, the activation signal on the first frequency resource, wherein the activation signal comprises the indication of the second frequency resource for transmitting, to the reader, the response signal.

The activation signal may trigger the device to transmit the response signal.

The response signal may be dependent on the activation signal. The response signal may be a backscattered ( i.e., reflected) modulation of the activation signal.

The device may be an active device. The response signal may be independent from the activation signal. The response signal may not be a backscattered ( i.e., reflected) modulation of the activation signal.

The indication of the first frequency resource for transmitting, to the device, the activation signal may be an explicit indication; and the indication of the second frequency resource for transmitting, to the reader, the response signal may be an explicit indication.

The indication of the first frequency resource for transmitting, to the device, the activation signal may be an explicit indication; and the indication of the second frequency resource for transmitting, to the reader, the response signal may be an implicit indication.

The implicit indication may comprise a parameter to determine the second frequency resource based on the first frequency resource.

The first frequency resource may comprise at least one of a carrier or a subcarrier; and the second frequency resource may comprise at least one of a carrier or a subcarrier.

The control information may comprise an indication of a first time resource for transmitting, to the device, the activation signal and an indication of a second time resource for transmitting, to the reader, the response signal, wherein the first time resource is at least partly different from the second time resource.

The indication of the first time resource for transmitting, to the device, the activation signal may be an explicit indication; and the indication of the second time resource for transmitting, to the reader, the response signal may be an explicit indication.

The indication of the first time resource for transmitting, to the device, the activation signal may be an explicit indication; and the indication of the second time resource for transmitting, to the reader, the response signal may be an implicit indication.

The implicit indication may comprise a parameter to determine the second time resource based on the first time resource.

The first time resource may comprise at least one of a start time or a stop time; and the second time resource comprises at least one of a start time or a stop time.

The control information may be received on a downlink carrier.

The first frequency resource may comprise a downlink carrier and the second frequency resource a downlink carrier; the first frequency resource may comprise an uplink carrier and the second frequency resource comprises an uplink carrier; the first frequency resource may comprise a downlink carrier and the second frequency resource comprises an uplink carrier; the first frequency resource may comprise an uplink carrier and the second frequency resource comprises a downlink carrier; the first frequency resource may comprise a carrier distinct from an uplink carrier and a downlink carrier and the second frequency resource comprises a downlink carrier; the first frequency resource may comprise a carrier distinct from an uplink carrier and a downlink carrier and the second frequency resource comprises an uplink carrier; or the first frequency resource may comprise a carrier distinct from an uplink carrier and a downlink carrier and the second frequency resource comprises a carrier distinct from an uplink carrier and a downlink carrier.

The base station may comprise a reader.

The first frequency resource may comprise a downlink carrier and the second frequency resource may comprise an uplink carrier; or the first frequency resource may comprise a carrier distinct from an uplink carrier and a downlink carrier and the second frequency resource may comprise an uplink carrier.

The apparatus may comprise an activator.

The apparatus may comprise a user equipment.

According to an aspect there is provided an apparatus comprising means for: receiving, from a base station, control information comprising an indication of a first frequency resource for transmitting, to a device, an activation signal and an indication of a second frequency resource for transmitting, to a reader, a response signal, wherein the first frequency resource is at least partially different from the second frequency resource; and transmitting, to the device, the activation signal on the first frequency resource, wherein the activation signal comprises the indication of the second frequency resource for transmitting, to the reader, the response signal..

According to an aspect there is provided an apparatus comprising circuitry configured to: receive, from a base station, control information comprising an indication of a first frequency resource for transmitting, to a device, an activation signal and an indication of a second frequency resource for transmitting, to a reader, a response signal, wherein the first frequency resource is at least partially different from the second frequency resource; and transmit, to the device, the activation signal on the first frequency resource, wherein the activation signal comprises the indication of the second frequency resource for transmitting, to the reader, the response signal.

According to an aspect there is provided a method comprising: receiving, from a base station, control information comprising an indication of a first frequency resource for transmitting, to a device, an activation signal and an indication of a second frequency resource for transmitting, to a reader, a response signal, wherein the first frequency resource is at least partially different from the second frequency resource; and transmitting, to the device, the activation signal on the first frequency resource, wherein the activation signal comprises the indication of the second frequency resource for transmitting, to the reader, the response signal.

The method may be performed by an apparatus.

The activation signal may trigger the device to transmit the response signal.

The response signal may be dependent on the activation signal. The response signal may be a backscattered ( i.e., reflected) modulation of the activation signal.

The device may be an active device. The response signal may be independent from the activation signal. The response signal may not be a backscattered ( i.e., reflected) modulation of the activation signal.

The indication of the first frequency resource for transmitting, to the device, the activation signal may be an explicit indication; and the indication of the second frequency resource for transmitting, to the reader, the response signal may be an explicit indication.

The indication of the first frequency resource for transmitting, to the device, the activation signal may be an explicit indication; and the indication of the second frequency resource for transmitting, to the reader, the response signal may be an implicit indication.

The implicit indication may comprise a parameter to determine the second frequency resource based on the first frequency resource.

The first frequency resource may comprise at least one of a carrier or a subcarrier; and the second frequency resource may comprise at least one of a carrier or a subcarrier.

The control information may comprise an indication of a first time resource for transmitting, to the device, the activation signal and an indication of a second time resource for transmitting, to the reader, the response signal, wherein the first time resource is at least partly different from the second time resource.

The indication of the first time resource for transmitting, to the device, the activation signal may be an explicit indication; and the indication of the second time resource for transmitting, to the reader, the response signal may be an explicit indication.

The indication of the first time resource for transmitting, to the device, the activation signal may be an explicit indication; and the indication of the second time resource for transmitting, to the reader, the response signal may be an implicit indication.

The implicit indication may comprise a parameter to determine the second time resource based on the first time resource.

The first time resource may comprise at least one of a start time or a stop time; and the second time resource comprises at least one of a start time or a stop time.

The control information may be received on a downlink carrier.

The first frequency resource may comprise a downlink carrier and the second frequency resource a downlink carrier; the first frequency resource may comprise an uplink carrier and the second frequency resource comprises an uplink carrier; the first frequency resource may comprise a downlink carrier and the second frequency resource comprises an uplink carrier; the first frequency resource may comprise an uplink carrier and the second frequency resource comprises a downlink carrier; the first frequency resource may comprise a carrier distinct from an uplink carrier and a downlink carrier and the second frequency resource comprises a downlink carrier; the first frequency resource may comprise a carrier distinct from an uplink carrier and a downlink carrier and the second frequency resource comprises an uplink carrier; or the first frequency resource may comprise a carrier distinct from an uplink carrier and a downlink carrier and the second frequency resource comprises a carrier distinct from an uplink carrier and a downlink carrier.

The base station may comprise a reader.

The first frequency resource may comprise a downlink carrier and the second frequency resource may comprise an uplink carrier; or the first frequency resource may comprise a carrier distinct from an uplink carrier and a downlink carrier and the second frequency resource may comprise an uplink carrier.

The apparatus may comprise an activator.

The apparatus may comprise a user equipment.

According to an aspect there is provided a computer program comprising computer executable code which when run on at least one processor is configured to: receive, from a base station, control information comprising an indication of a first frequency resource for transmitting, to a device, an activation signal and an indication of a second frequency resource for transmitting, to a reader, a response signal, wherein the first frequency resource is at least partially different from the second frequency resource; and transmit, to the device, the activation signal on the first frequency resource, wherein the activation signal comprises the indication of the second frequency resource for transmitting, to the reader, the response signal.

According to an aspect there is provided an apparatus comprising at least one processor and at least one memory storing instructions that, when executed by the at least one processor, cause the apparatus at least to: determine a first frequency resource for transmitting, to a device, an activation signal and a second frequency resource for transmitting, to a reader, a response signal, wherein the first frequency resource is at least partially different from the second frequency resource.

The at least one memory may store instructions that, when executed by the at least one processor, cause the apparatus at least to: transmit, to an activator, control information comprising an indication of the first frequency resource for transmitting, to the device, the activation signal and an indication of the second frequency resource for transmitting, to the reader, the response signal.

The apparatus may comprise a base station.

The device may be an Internet of things device.

The device may be a passive device or an active device.

According to an aspect there is provided an apparatus comprising means for: determining a first frequency resource for transmitting, to a device, an activation signal and a second frequency resource for transmitting, to a reader, a response signal, wherein the first frequency resource is at least partially different from the second frequency resource.

According to an aspect there is provided an apparatus comprising circuitry configured to: determine a first frequency resource for transmitting, to a device, an activation signal and a second frequency resource for transmitting, to a reader, a response signal, wherein the first frequency resource is at least partially different from the second frequency resource.

According to an aspect there is provided a method comprising: determining a first frequency resource for transmitting, to a device, an activation signal and a second frequency resource for transmitting, to a reader, a response signal, wherein the first frequency resource is at least partially different from the second frequency resource.

The method may be performed by an apparatus.

The method may comprise: transmitting, to an activator, control information comprising an indication of the first frequency resource for transmitting, to the device, the activation signal and an indication of the second frequency resource for transmitting, to the reader, the response signal.

The apparatus may comprise a base station.

The device may be an Internet of things device.

The device may be a passive device or an active device.

According to an aspect there is provided a computer program comprising computer executable code which when run on at least one processor is configured to: determine a first frequency resource for transmitting, to a device, an activation signal and a second frequency resource for transmitting, to a reader, a response signal, wherein the first frequency resource is at least partially different from the second frequency resource.

According to an aspect there is provided an apparatus comprising at least one processor and at least one memory storing instructions that, when executed by the at least one processor, cause the apparatus at least to: receive, from a base station, downlink control information comprising: a frequency resource indication value including an indication of a first frequency resource for transmitting, to a device, an activation signal and an indication of a second frequency resource for transmitting, to a reader, a response signal, wherein the first frequency resource is at least partially different from the second frequency resource; and a time resource indication value including an indication of a first time resource for transmitting, to the device, the activation signal and an indication of a second time resource for transmitting, to the reader, the response signal, wherein the first time resource is at least partially different from the second time resource; and transmit, to the device, the activation signal on the first frequency resource, wherein the activation signal comprises the indication of the second frequency resource for transmitting, to the reader, the response signal.

The activation signal may trigger the device to transmit the response signal.

The response signal may be dependent on the activation signal. The response signal may be a backscattered ( i.e., reflected) modulation of the activation signal.

The device may be an active device. The response signal may be independent from the activation signal. The response signal may not be a backscattered ( i.e., reflected) modulation of the activation signal.

The indication of the first frequency resource for transmitting, to the device, the activation signal may be an explicit indication; and the indication of the second frequency resource for transmitting, to the reader, the response signal may be an explicit indication.

The indication of the first frequency resource for transmitting, to the device, the activation signal may be an explicit indication; and the indication of the second frequency resource for transmitting, to the reader, the response signal may be an implicit indication.

The implicit indication may comprise a parameter to determine the second frequency resource based on the first frequency resource.

The first frequency resource may comprise at least one of a carrier or a subcarrier; and the second frequency resource may comprise at least one of a carrier or a subcarrier.

The indication of the first time resource for transmitting, to the device, the activation signal may be an explicit indication; and the indication of the second time resource for transmitting, to the reader, the response signal may be an explicit indication.

The indication of the first time resource for transmitting, to the device, the activation signal may be an explicit indication; and the indication of the second time resource for transmitting, to the reader, the response signal may be an implicit indication.

The implicit indication may comprise a parameter to determine the second time resource based on the first time resource.

The first time resource may comprise at least one of a start time or a stop time; and the second time resource may comprise at least one of a start time or a stop time.

The downlink control information may be received on a downlink carrier.

The first frequency resource may comprise a downlink carrier and the second frequency resource a downlink carrier; the first frequency resource may comprise an uplink carrier and the second frequency resource comprises an uplink carrier; the first frequency resource may comprise a downlink carrier and the second frequency resource comprises an uplink carrier; the first frequency resource may comprise an uplink carrier and the second frequency resource comprises a downlink carrier; the first frequency resource may comprise a carrier distinct from an uplink carrier and a downlink carrier and the second frequency resource comprises a downlink carrier; the first frequency resource may comprise a carrier distinct from an uplink carrier and a downlink carrier and the second frequency resource comprises an uplink carrier; or the first frequency resource may comprise a carrier distinct from an uplink carrier and a downlink carrier and the second frequency resource comprises a carrier distinct from an uplink carrier and a downlink carrier.

The base station may comprise a reader.

The first frequency resource may comprise a downlink carrier and the second frequency resource comprises an uplink carrier; or the first frequency resource may comprise a carrier distinct from an uplink carrier and a downlink carrier and the second frequency resource comprises an uplink carrier.

The apparatus may comprise an activator.

The apparatus may comprise a user equipment.

According to an aspect there is provided an apparatus comprising means for: receiving, from a base station, downlink control information comprising: a frequency resource indication value including an indication of a first frequency resource for transmitting, to a device, an activation signal and an indication of a second frequency resource for transmitting, to a reader, a response signal, wherein the first frequency resource is at least partially different from the second frequency resource; and a time resource indication value including an indication of a first time resource for transmitting, to the device, the activation signal and an indication of a second time resource for transmitting, to the reader, the response signal, wherein the first time resource is at least partially different from the second time resource; and transmitting, to the device, the activation signal on the first frequency resource, wherein the activation signal comprises the indication of the second frequency resource for transmitting, to the reader, the response signal.

According to an aspect there is provided an apparatus comprising circuitry configured to: receive, from a base station, downlink control information comprising: a frequency resource indication value including an indication of a first frequency resource for transmitting, to a device, an activation signal and an indication of a second frequency resource for transmitting, to a reader, a response signal, wherein the first frequency resource is at least partially different from the second frequency resource; and a time resource indication value including an indication of a first time resource for transmitting, to the device, the activation signal and an indication of a second time resource for transmitting, to the reader, the response signal, wherein the first time resource is at least partially different from the second time resource; and transmit, to the device, the activation signal on the first frequency resource, wherein the activation signal comprises the indication of the second frequency resource for transmitting, to the reader, the response signal.

According to an aspect there is provided a method comprising: receiving, from a base station, downlink control information comprising: a frequency resource indication value including an indication of a first frequency resource for transmitting, to a device, an activation signal and an indication of a second frequency resource for transmitting, to a reader, a response signal, wherein the first frequency resource is at least partially different from the second frequency resource; and a time resource indication value including an indication of a first time resource for transmitting, to the device, the activation signal and an indication of a second time resource for transmitting, to the reader, the response signal, wherein the first time resource is at least partially different from the second time resource; and transmitting, to the device, the activation signal on the first frequency resource, wherein the activation signal comprises the indication of the second frequency resource for transmitting, to the reader, the response signal.

The method may be performed by an apparatus.

The activation signal may trigger the device to transmit the response signal.

The response signal may be dependent on the activation signal. The response signal may be a backscattered ( i.e., reflected) modulation of the activation signal.

The device may be an active device. The response signal may be independent from the activation signal. The response signal may not be a backscattered ( i.e., reflected) modulation of the activation signal.

The indication of the first frequency resource for transmitting, to the device, the activation signal may be an explicit indication; and the indication of the second frequency resource for transmitting, to the reader, the response signal may be an explicit indication.

The indication of the first frequency resource for transmitting, to the device, the activation signal may be an explicit indication; and the indication of the second frequency resource for transmitting, to the reader, the response signal may be an implicit indication.

The implicit indication may comprise a parameter to determine the second frequency resource based on the first frequency resource.

The first frequency resource may comprise at least one of a carrier or a subcarrier; and the second frequency resource may comprise at least one of a carrier or a subcarrier.

The indication of the first time resource for transmitting, to the device, the activation signal may be an explicit indication; and the indication of the second time resource for transmitting, to the reader, the response signal may be an explicit indication.

The indication of the first time resource for transmitting, to the device, the activation signal may be an explicit indication; and the indication of the second time resource for transmitting, to the reader, the response signal may be an implicit indication.

The implicit indication may comprise a parameter to determine the second time resource based on the first time resource.

The first time resource may comprise at least one of a start time or a stop time; and the second time resource may comprise at least one of a start time or a stop time.

The downlink control information may be received on a downlink carrier.

The first frequency resource may comprise a downlink carrier and the second frequency resource a downlink carrier; the first frequency resource may comprise an uplink carrier and the second frequency resource comprises an uplink carrier; the first frequency resource may comprise a downlink carrier and the second frequency resource comprises an uplink carrier; the first frequency resource may comprise an uplink carrier and the second frequency resource comprises a downlink carrier; the first frequency resource may comprise a carrier distinct from an uplink carrier and a downlink carrier and the second frequency resource comprises a downlink carrier; the first frequency resource may comprise a carrier distinct from an uplink carrier and a downlink carrier and the second frequency resource comprises an uplink carrier; or the first frequency resource may comprise a carrier distinct from an uplink carrier and a downlink carrier and the second frequency resource comprises a carrier distinct from an uplink carrier and a downlink carrier.

The base station may comprise a reader.

The first frequency resource may comprise a downlink carrier and the second frequency resource comprises an uplink carrier; or the first frequency resource may comprise a carrier distinct from an uplink carrier and a downlink carrier and the second frequency resource comprises an uplink carrier.

The apparatus may comprise an activator.

The apparatus may comprise a user equipment.

According to an aspect there is provided a computer program comprising computer executable code which when run on at least one processor is configured to: receive, from a base station, downlink control information comprising: a frequency resource indication value including an indication of a first frequency resource for transmitting, to a device, an activation signal and an indication of a second frequency resource for transmitting, to a reader, a response signal, wherein the first frequency resource is at least partially different from the second frequency resource; and a time resource indication value including an indication of a first time resource for transmitting, to the device, the activation signal and an indication of a second time resource for transmitting, to the reader, the response signal, wherein the first time resource is at least partially different from the second time resource; and transmit, to the device, the activation signal on the first frequency resource, wherein the activation signal comprises the indication of the second frequency resource for transmitting, to the reader, the response signal.

According to an aspect there is provided an apparatus comprising at least one processor and at least one memory storing instructions that, when executed by the at least one processor, cause the apparatus at least to: determine a first frequency resource for transmitting, to a device, an activation signal and a second frequency resource for transmitting, to a reader, a response signal, wherein the first frequency resource is different from the second frequency resource; and determine a first time resource for transmitting, to the device, the activation signal and a second time resource for transmitting, to the reader, the response signal, wherein the first time resource is at least partially different from the second time resource.

The at least one memory may store instructions that, when executed by the at least one processor, cause the apparatus at least to: transmit, to an activator, downlink control information comprising: a frequency resource indication value including an indication of the first frequency resource for transmitting, to the device, the activation signal and an indication of the second frequency resource for transmitting, to the reader, the response signal; and a time resource indication value including an indication of the first time resource for transmitting, to the device, the activation signal and an indication of the second time resource for transmitting, to the reader, the response signal.

The apparatus may comprise a base station.

The device may be an Internet of things device.

The device may be a passive device or an active device.

According to an aspect there is provided an apparatus comprising means for: determining a first frequency resource for transmitting, to a device, an activation signal and a second frequency resource for transmitting, to a reader, a response signal, wherein the first frequency resource is different from the second frequency resource; and determine a first time resource for transmitting, to the device, the activation signal and a second time resource for transmitting, to the reader, the response signal, wherein the first time resource is at least partially different from the second time resource.

According to an aspect there is provided an apparatus comprising circuitry configured to: determine a first frequency resource for transmitting, to a device, an activation signal and a second frequency resource for transmitting, to a reader, a response signal, wherein the first frequency resource is different from the second frequency resource; and determine a first time resource for transmitting, to the device, the activation signal and a second time resource for transmitting, to the reader, the response signal, wherein the first time resource is at least partially different from the second time resource.

According to an aspect there is provided a method comprising: determining a first frequency resource for transmitting, to a device, an activation signal and a second frequency resource for transmitting, to a reader, a response signal, wherein the first frequency resource is different from the second frequency resource; and determine a first time resource for transmitting, to the device, the activation signal and a second time resource for transmitting, to the reader, the response signal, wherein the first time resource is at least partially different from the second time resource.

The method may be performed by an apparatus.

The method may comprise: transmitting, to an activator, downlink control information comprising: a frequency resource indication value including an indication of the first frequency resource for transmitting, to the device, the activation signal and an indication of the second frequency resource for transmitting, to the reader, the response signal; and a time resource indication value including an indication of the first time resource for transmitting, to the device, the activation signal and an indication of the second time resource for transmitting, to the reader, the response signal.

The apparatus may comprise a base station.

The device may be an Internet of things device.

The device may be a passive device or an active device.

According to an aspect there is provided a computer program comprising computer executable code which when run on at least one processor is configured to: determine a first frequency resource for transmitting, to a device, an activation signal and a second frequency resource for transmitting, to a reader, a response signal, wherein the first frequency resource is different from the second frequency resource; and determine a first time resource for transmitting, to the device, the activation signal and a second time resource for transmitting, to the reader, the response signal, wherein the first time resource is at least partially different from the second time resource.

According to an aspect, there is provided a computer readable medium comprising program instructions stored thereon for performing at least one of the above methods.

According to an aspect, there is provided a non-transitory computer readable medium comprising program instructions stored thereon for performing at least one of the above methods.

According to an aspect, there is provided a non-volatile tangible memory medium comprising program instructions stored thereon for performing at least one of the above methods.

In the above, many different aspects have been described. It should be appreciated that further aspects may be provided by the combination of any two or more of the aspects described above.

Various other aspects are also described in the following detailed description and in the attached claims.

List of abbreviations

| | |
|---|---|
| AF: | Application Function |
| AI: | Artificial Intelligence |
| AIoT/A-IoT: | Ambient Internet of Things |
| AMF: | Access and Mobility Management Function |
| BS: | Base Station |
| CU: | Centralized Unit |
| DCI: | Downlink Control Information |
| DL: | Downlink |
| DU: | Distributed Unit |
| FRIV: | Frequency Resource Indicator Value |
| gNB: | gNodeB |
| HSS: | Home Subscriber Server |
| IoT: | Internet of Things |

LTE:          Long Term Evolution
MAC:          Medium Access Control
MS:           Mobile Station
MTC:          Machine Type Communication
NEF:          Network Exposure Function
NF:           Network Function
NR:           New radio
NRF:          Network Repository Function
RAM:          Random Access Memory
(R)AN:        (Radio) Access Network
ROM:          Read Only Memory
SMF:          Session Management Function
TRIV:         Time Resource Indicator Value
UE:           User Equipment
5G:           5$^{th}$ Generation
5GC:          5G Core network
5GS:          5G System

Brief Description of the Figures

Embodiments will now be described, by way of example only, with reference to the accompanying Figures in which:

Fig. 1 shows a schematic representation of a 5G system;

Fig. 2 shows a schematic representation of a control apparatus;

Fig. 3 shows a schematic representation of a user equipment;

Fig. 4 shows a schematic representation of three topologies (a), (b) and (c) for managing an ambient Internet of things device;

Fig. 5 shows a schematic representation of a topology (a) with three options for transmitting an activation signal and a response signal using frequency division duplex;

Fig. 6 shows a schematic representation of a topology (b) with two options for transmitting an activation signal and a response signal using frequency division duplex;

Fig. 7 shows a schematic representation of a topology (c) with six options for transmitting an activation signal and a response signal using frequency division duplex;

Fig. 8 shows a block diagram of a method for receiving, from an ambient Internet of things device, a response signal;

Fig. 9 shows a block diagram of a method for transmitting, to an ambient Internet of things device, an activation signal ;

Fig. 10 shows a block diagram of a method for transmitting, to an ambient Internet of things device an activation signal;

Fig. 11 shows a block diagram of a method for transmitting, to an ambient Internet of things device an activation signal;

Fig. 12 shows a block diagram of a method for transmitting, to an ambient Internet of things device an activation signal;

Fig. 13 shows a block diagram of a method for receiving, from an ambient Internet of things device, a response signal; and

Fig. 14 shows a schematic representation of a non-volatile memory medium storing instructions which when executed by a processor allow a processor to perform one or more of the steps of the methods of Fig. 9 to Fig. 13.

Detailed Description of the Figures

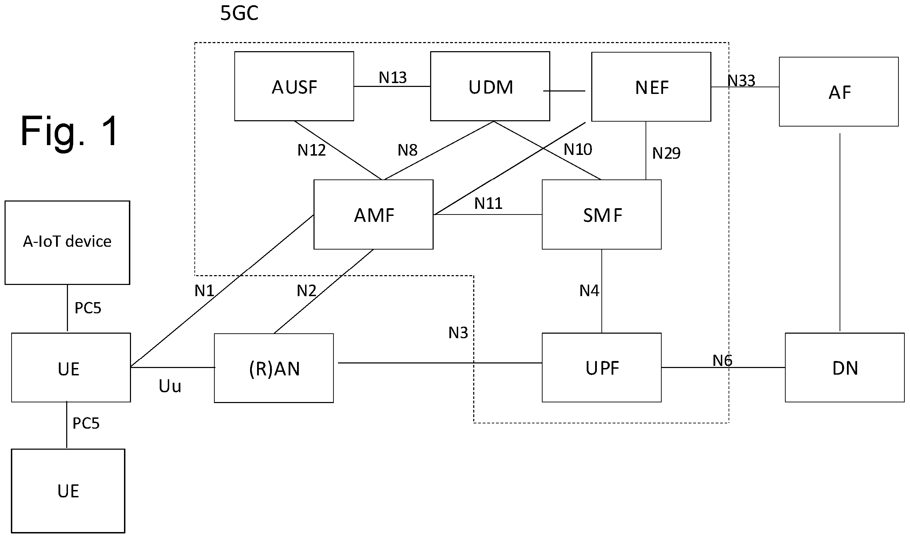

In the following certain embodiments are explained with reference to mobile communication devices capable of communication via a wireless cellular system and mobile communication systems serving such mobile communication devices. Before explaining in detail the exemplifying embodiments, certain general principles of a wireless communication system, access systems thereof, and mobile communication devices are briefly explained with reference to Fig. 1, Fig.2 and Fig.3 to assist in understanding the technology underlying the described examples.
FIG. 1 shows a schematic representation of a 5G system (5GS). The 5GS may comprise Internet of things (IoT) devices, user equipment (UEs), a (radio) access network ((R)AN), a 5G core network (5GC), one or more application functions (AF) and one or more data networks (DN).
The IoT devices may comprise ambient IoT (AIoT) devices. An AIoT device may be configured to measure ambient conditions, such as location, temperature, pressure, noise, light or other ambient conditions. An AIoT device may comprise a sensor.
The UEs may comprise activator UEs, reader UEs or activator and reader UEs. An activator UE may be configured to transmit an activation signal to an AIoT device to trigger the AIoT device to transmit a response signal to a reader UE. A reader UE may be configured to receive a response signal from an AIoT device and to transmit a report signal to the 5G(R)AN.
The AIoT device may be of different types.
An AIoT device type A may refer to an AIoT device that does not have energy storage and that is not capable of transmitting a response signal to a reader UE independent from an activation signal received from an activator UE. The AIoT device may comprise a passive radio frequency transmission component. The AIoT device may be capable of transmitting a response signal dependent from an activation signal received from an activator UE. The response signal may be a backscattered ( i.e., reflected) modulation of the activation signal received from an activator UE. The modulation may be used to convey content, such as an identifier of the AIoT device or a measurement performed by the AIoT device. The power of the activation signal received from the activator UE may be controlled by the activator UE.

An AIoT device type B may refer to an AIoT device that has energy storage and that is not capable of transmitting a response signal to a reader UE independent from an activation signal received from an activator UE. The AIoT may comprise a passive radio frequency transmission component. The AIoT device may be capable of transmitting a response signal dependent on an activation signal received from an activator UE. The response signal may be a backscattered ( i.e., reflected) modulation of the activation signal received from an activator UE, such as an identifier of the AIoT device or a measurement performed by the AIoT device. The power of the activation signal received from the activator UE may be controlled by the activator UE. The power of the response signal transmitted by the AIoT device may be controlled by the AIoT device. The power of the response signal transmitted by the AIoT device may not be controlled by the AIoT device.

An AIoT device type C may refer to an AIoT device that has energy storage and that is capable of transmitting a response signal independent from an activation signal received from an activator UE. The AIoT may comprise an active radio frequency transmission component. The power of the activation signal received from the activator UE may be controlled by the activator UE. The power of the response signal transmitted by the AIoT device may be controlled by the AIoT device.

For the case of AIoT device type A and AIoT device type B (i.e., the response signal may be a backscattered ( i.e., reflected) modulation of the activation signal), there may be a relation between the activation signal and the response signal. For this reason, the control information may comprise the resource assignment for transmitting the activation signal and transmitting the response signal.

The 5G (R)AN may comprise one or more gNodeBs (gNBs). The gNodeBs may comprise one or more gNB distributed unit functions connected to one or more gNB centralized unit functions.

The gNodeBs may comprise activator gNodeBs, reader gNodeBs or activator and reader gNodeBs.

The 5GC may comprise an access and mobility management function (AMF), a session management function (SMF), an authentication server function (AUSF), a user data management (UDM), a user plane function (UPF), a network exposure function (NEF).

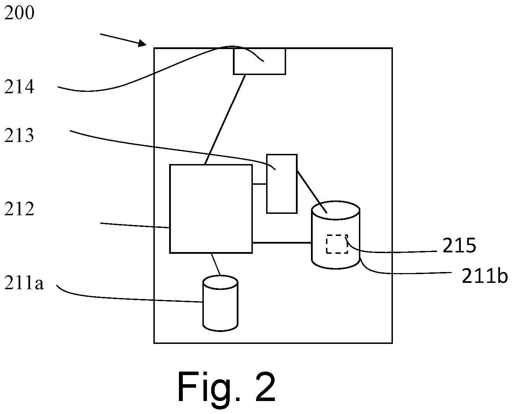

Fig. 2 illustrates an example of a control apparatus 200 for controlling a function of the (R)AN or the 5GC as illustrated on Fig. 1. The control apparatus may comprise at least one random access memory (RAM) 211a, at least on read only memory (ROM) 211b, at least one processor 212, 213 and an input/output interface 214. The at least one processor 212, 213 may be coupled to the RAM 211a and the ROM 211b. The at least one processor 212, 213 may be configured to execute an appropriate software code 215. The software code 215 may for example allow to perform one or more steps to perform one or more of the present aspects. The software code 215 may be stored in the ROM 211b. The control apparatus 200 may be interconnected with another control apparatus 200 controlling another function of the 5G (R)AN or the 5GC. In some embodiments, each function of the (R)AN or the 5GC comprises a control apparatus 200. In alternative embodiments, two or more functions of the (R)AN or the 5GC may share a control apparatus.

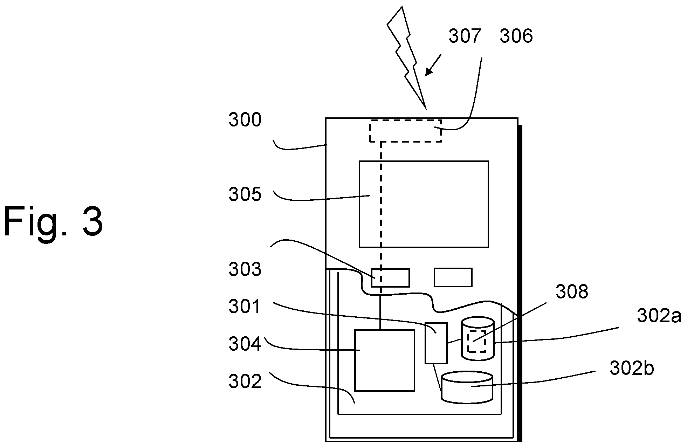

Fig. 3 illustrates an example of a user equipment 300, such as the terminal illustrated on Fig. 1. The UE 300 may be provided by any device capable of sending and receiving radio signals. Non-limiting examples comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, a Cellular Internet of things (CIoT) device or any combinations of these or the like. The UE 300 may provide, for example, communication of data for carrying communications. The communications may be one or more of voice, electronic mail (email), text message, multimedia, data, machine data and so on.

The UE 300 may receive signals over an air or radio interface 307 via appropriate apparatus for receiving and may transmit signals via appropriate apparatus for transmitting radio signals. In Fig. 3 transceiver apparatus is designated schematically by block 306. The transceiver apparatus 306 may be provided for example by means of a radio part and associated antenna arrangement. The antenna arrangement may be arranged internally or externally to the mobile device.

The UE 300 may be provided with at least one processor 301, at least one memory ROM 302a, at least one RAM 302b and other possible components 303 for use in software and hardware aided execution of tasks it is designed to perform, including control of access to and communications with access systems and other communication devices. The at least one processor 301 is coupled to the RAM 302b and the ROM 302a. The at least one processor 301 may be configured to execute an appropriate software code 308. The software code 308 may for example allow to perform one or more of the present aspects. The software code 308 may be stored in the ROM 302a.

The processor, storage and other relevant control apparatus can be provided on an appropriate circuit board and/or in chipsets. This feature is denoted by reference 304. The device may optionally have a user interface such as keypad 305, touch sensitive screen or pad, combinations thereof or the like. Optionally one or more of a display, a speaker and a microphone may be provided depending on the type of the device.

One or more aspect of this disclosure provides a mechanism for transmitting an activation signal and transmitting a response signal.

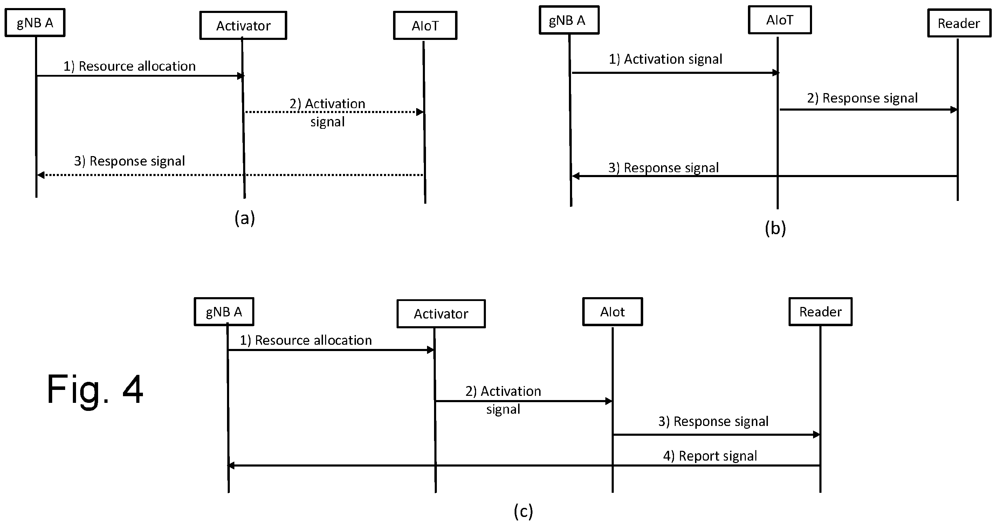

Fig. 4 shows a schematic representation of three topologies (a), (b) and (c) for managing an AIoT device.

The topology (a) comprises a gNB taking the role of a reader, an activator UE and an AIoT device.

The gNB may determine a resource assignment for transmitting an activation signal and a resource assignment for transmitting a response signal.

The gNB may transmit, to the activator, control information comprising an indication of the resource assignment for transmitting the activation signal and an indication of the resource assignment transmitting the response signal.

The activator UE may transmit, to the AIoT device, the activation signal based on the resource assignment for transmitting the activation signal. The activation signal may comprise the indication of the resource assignment for transmitting the response signal.

The AIoT device may transmit, to the gNB, the response signal based on the resource assignment for transmitting the response signal.

The gNB may decode the content of the response signal. The gNB may use the content of the response signal, for example to detect, read or localize the AIoT device.

The topology (b) comprises a gNB taking the role of an activator, UE an AIoT device and a reader UE.

The gNB may determine a resource assignment for transmitting an activation signal and a resource assignment for transmitting a response signal.

The gNB may transmit, to the AIoT device, the activation signal based on the resource assignment for transmitting the activation signal. The activation signal may comprise an indication of the resource assignment for transmitting the response signal.

The AIoT device may transmit, to the reader UE, the response signal based on the resource assignment for transmitting the response signal.

The reader UE may transmit, to the gNB a report signal based on the response signal. The gNB may receive the report signal. The gNB may decode the content of the report signal. The gNB may use the content of the report signal, for example to detect, read or localize the AIoT device.

The topology (c) comprises a gNB, an activator UE, an AIoT device and a reader UE.

The gNB may determine a resource assignment for transmitting an activation signal and a resource assignment for transmitting a response signal.

The gNB may transmit, to the activator UE, control information comprising an indication of the resource assignment for transmitting the activation signal and an indication of the resource assignment for transmitting a response signal.

The activator UE may transmit, to the AIoT device, the activation signal based on the resource assignment for transmitting the activation signal. The activation signal may comprise the indication of the resource assignment for transmitting the response signal.

The AIoT device may transmit, to the reader UE, the response signal based on the resource assignment for transmitting the response signal.

The reader UE may transmit, to the gNB a report signal based on the response signal.

The gNB may receive the report signal. The gNB may decode the content of the report signal. The gNB may use the content of the report signal, for example to detect, read or localize the AIoT device.

In the topology (a), the topology (b) or the topology (c), the control information may comprise downlink control information (DCI).

One or more aspect of this disclosure provides a mechanism for transmitting the activation signal and the response signal using frequency division duplex (FDD).

When the AIoT device may be an AIoT device type A or AIoT device type B AIoT device type, there may be a relation between the activation signal and the AIoT response ( i.e., the response signal may be a backscattered ( i.e., reflected) modulation of the activation signal received from an activator UE). This relation may refer to the fact that the response signal may only be transmitted while the activation signal is transmitted. This means the transmission of the activation signal and the transmission of the response signal may partially overlap.

The DCI may comprise a frequency resource indication value (FRIV) indicating a first frequency resource for transmitting the activation signal and a second frequency resource for transmitting the response signal. The first frequency resource may be at least partially different from the second frequency resource. The first frequency resource may comprise at least one of a carrier or a subcarrier. The second frequency resource may comprise at least one of a carrier or a subcarrier. The first frequency resource and the second frequency resource may be part of FR1.

The FRIV may explicitly indicate the first frequency resource and may explicitly indicate the second frequency resource.

Alternatively, the FRIV may explicitly indicate the first frequency resource and may implicitly indicate the second frequency resource. For example, the FRIV may indicate a parameter (e.g. frequency offset) to determine the second frequency resource based on the first frequency resource. The parameter may map the first frequency resource to the second frequency resource.

The DCI may comprise a time domain indication value (TRIV) comprising indicating a first time resource for transmitting the activation signal and a second time resource for transmitting the response signal. The first time resource may be at least partially different from the second time resource. The first time resource may comprise a start time and an end time. The second time resource may comprise a start time and an end time. The start time of the first time resource may be different from the start time of the second time resource. The end time of the first time resource may be the same as the end time of the second time resource.

The TRIV may explicitly indicate the first time resource and may explicitly indicate the second time resource.

Alternatively, the TRIV may explicitly indicate the first time resource and may implicitly indicate the second time resource. For example, the TRIV may indicate a parameter (e.g. time offset) to determine the second time resource based on the first time resource. The parameter may map the first time resource to the second time resource (e.g. the parameter may map the start time of the first time resource to the start time of the second time resource).

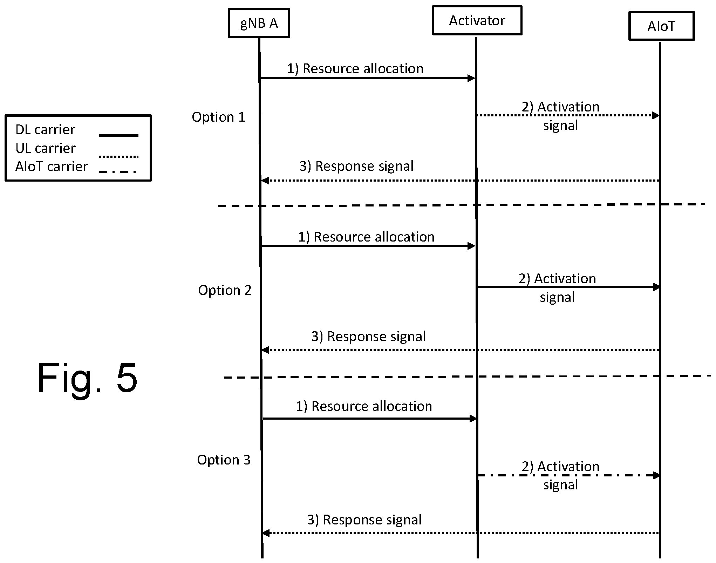

Fig. 5 shows a schematic representation of the topology (a) with three options for transmitting the activation signal and the response signal using FDD.

In option 1, the gNB may transmit the DCI on a downlink carrier. The activator UE may transmit the activation signal on an uplink carrier. The AIoT device may transmit the response signal on a downlink carrier.

In option 2, the gNB may transmit the DCI on a downlink carrier. The activator UE may transmit the activation signal on a downlink carrier. The AIoT device may transmit the response signal on an uplink carrier.

Alternatively, the AIoT device may transmit the response signal on a downlink carrier. This may be used when the AIoT device may not be able to switch to an uplink carrier to transmit the response signal. In this case the gNB may be able to operate capable in full Duplex operation or at least flexible duplex (e.g., half duplex or semi duplex).

In option 3, the gNB may transmit the DCI on a downlink carrier. The activator UE may transmit the activation signal on a carrier different from an uplink carrier and a downlink carrier. The AIoT device may transmit the response signal on an uplink carrier.

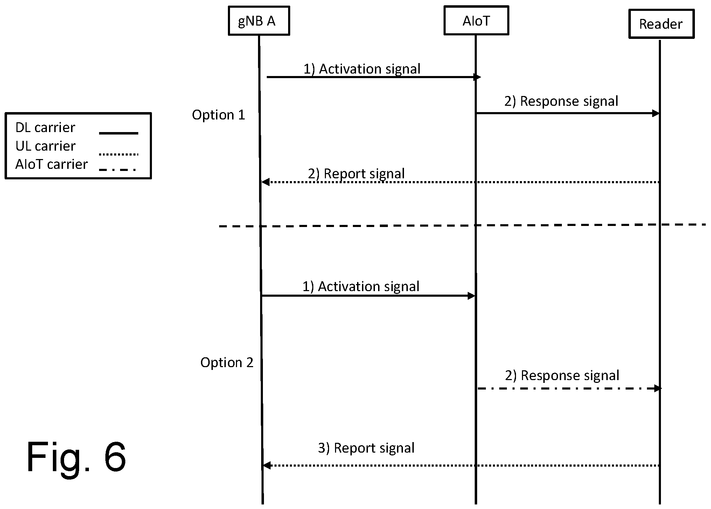

Fig. 6 shows a schematic representation of the topology (b) with two options for transmitting the activation signal and the response signal using FDD.

In option 1, the gNB ( i.e., activator) may transmit the activation signal on a downlink carrier. Alternatively, the gNB ( i.e., activator) may transmit the activation signal on an uplink carrier. The AIoT device may transmit the response signal on a downlink carrier. The reader UE may transmit the report signal on an uplink carrier. That is, the gNB may apply full duplex transmission and reception on an uplink carrier.

In option 2, the gNB ( i.e., activator) may transmit the activation signal on a downlink carrier. Alternatively, the gNB ( i.e., activator) may transmit the activation signal on an uplink carrier. The AIoT device may transmit the response signal on a carrier different from an uplink carrier and a downlink carrier. The reader UE may transmit the report signal on an uplink carrier. That is, the gNB may apply full duplex transmission and reception on an uplink carrier.

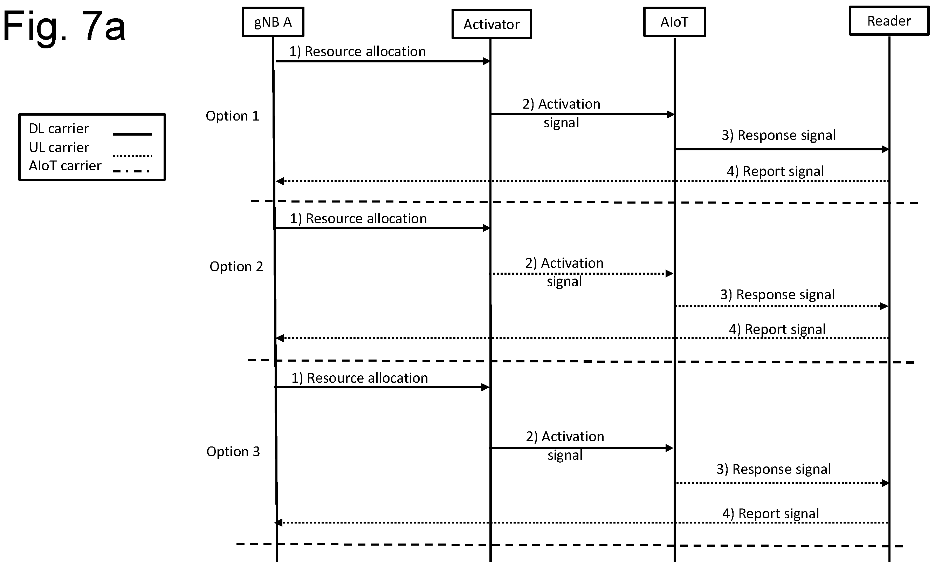

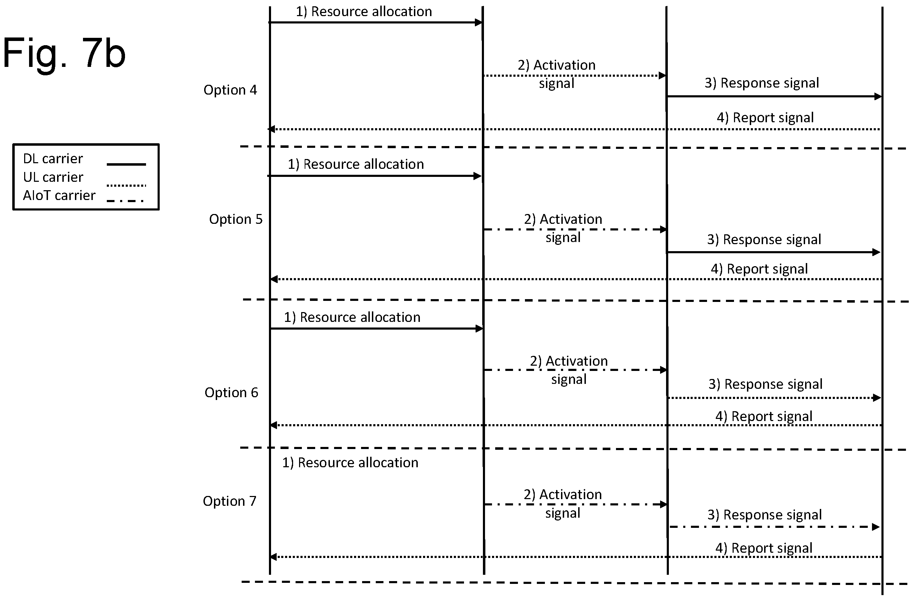

Fig. 7 shows a schematic representation of the topology (c) with six options for transmitting the activation signal and the response signal using FDD.

In option 1, the gNB may transmit the DCI on a downlink carrier. The activator UE may transmit the activation signal on a downlink carrier. The AIoT device may transmit the response signal on a downlink carrier. The reader UE may transmit the report signal on an uplink carrier.

In option 2, the gNB may transmit the DCI on a downlink carrier. The activator UE may transmit the activation signal on an uplink carrier. The AIoT device may transmit the response signal on an uplink carrier. The reader UE may transmit the report signal on an uplink carrier.

In option 3, the gNB may transmit the DCI on a downlink carrier. The activator UE may transmit the activation signal on a downlink carrier. The AIoT device may transmit the response signal on an uplink carrier. The reader UE may transmit the report signal on an uplink carrier.

In option 4, the gNB may transmit the DCI on a downlink carrier. The activator UE may transmit the activation signal on an uplink carrier. The AIoT device may transmit the response signal on a downlink carrier. The reader UE may transmit the report signal on an uplink carrier.

In option 5, the gNB may transmit the DCI on a downlink carrier. The activator UE may transmit the activation signal on a carrier different from an uplink carrier and a downlink carrier. The AIoT device may transmit the response signal on a downlink carrier. The reader UE may transmit the report signal on an uplink carrier.

In option 6, the gNB may transmit the DCI on a downlink carrier. The activator UE may transmit the activation signal on a carrier different from an uplink carrier and a downlink carrier. The AIoT device may transmit the response signal on an uplink carrier. The reader UE may transmit the report signal on an uplink carrier.

In option 7, the gNB may transmit the DCI on a downlink carrier. The activator UE may transmit the activation signal on a carrier different from an uplink carrier and a downlink carrier. The AIoT device may transmit the response signal on a carrier different from an uplink carrier and a downlink carrier. The reader UE may transmit the report signal on an uplink carrier.

One or more aspect of this disclosure provides a mechanism for receiving a response signal.

The AIoT device may transmit the response signal using a waveform. The waveform may comprise orthogonal frequency division duplex multiplexing (OFDM) or digital Fourier Transform spread frequency division multiplexing (DFT-s-FDM). An example of OFDM is cyclic prefix OFDM (CP-OFDM).

The decision to transmit the response signal using the waveform may be made by the gNB. A reader UE may comprise an OFDM receiver and a DFT-s-FDM receiver to decode OFDM and DFT-s-FDM. By default the reader UE may use the OFDM receiver. The reader UE may switch between the OFDM receiver and the DFT-s-FDM receiver when appropriate to receive the response signal.

CP-OFDM

When the response signal is transmitted using CP-OFDM, the response signal may comprise B symbols per frame. During a i-th transmission, $i \in [B - 1]$, a vector $u_i \in \{0, 1\}^K$ of bits may be encoded by the AIoT device with a code rate R and interleaved into the vector:

$$c_i = \left[ \left( c_i^{(0)} \right)^T, \ldots, \left( c_i^{N_D-1} \right)^T \right]^T \quad (1)$$

with entries $c_i^{(k)} \in \{0,1\}^Q$, $k \in [N_D - 1]$, $R * N_D * Q = K$, $Q$ the length of the vector. By [P] we denote the set $\{p \in \mathbb{N} | 0 \leq p \leq P\}$. The vector c, is modulated onto a vector of $N_D$ complex symbols that are interleaved with $N_P$ pilots to yield the symbol $x_i \in \mathbb{C}^N$, $N_P + N_D = M$.

Note that if the response signal does not contain any encoded data (e.g., payload), then all symbols may be considered as pilots and the encoding operation above may be skipped. In this case, $N_P = M$ and $N_D = 0$.

The m-th entry $x_i[m]$ of $x_i$ is a pilot symbol if $m \in P$ and a data symbol if $m \in D$. Here, $P = \{p_0, \ldots, p_{N_P-1}\}$ and $D = \{d_0, \ldots, d_{N_D-1}\}$, $P \cup D = [M - 1]$, $P \cap D = \varnothing$, are the subsets of pilot and data indexes, respectively. Note that:

$$x_i[d_k] = \mathcal{M}\left( c_i^{(k)} \right) \quad (2),$$

where $\mathcal{M}$ : $\{1,0\}^Q \rightarrow S_d$ denotes the complex modulation mapping, and $S_d$ is the complex symbol constellation with cardinality $2^Q$.

The vector $x_i$ may be passed through an inverse discrete Fourier transform block and the resulting vector $s_i$ is prepended a $\mu$-sample long cyclic prefix.

Each symbol $s_i$ in the B-long symbols frame may be sent then by the AIoT device over a channel (e.g. uplink channel) with response composed of L multipath

components:

$$g_i(\tau) = \sum_{l=0}^{L-1} h_i(l)\delta(\tau - \tau_i(l)) \quad (3)$$

where $h_i(l)$ and $\tau_i(l)$ model the gain and delay of the $l$-th multipath component.

The reader UE may observe a response signal which is sampled at a rate $\dfrac{1}{T_s}$, and the CP samples are discarded. The remaining samples are collected in B vectors that are passed through an M-point DFT block, at the output of which the received vector is:

$$y_i = H_i x_i + w_i \quad (4)$$

where $i \in [B - 1]$ and the matrix $H_i \in \mathbb{C}^{M \times M}$ is diagonal, with diagonal entries:

$$H_i[m, m] = \frac{1}{M} \sum_{l=0}^{L-1} h_i(l) \exp\left( \frac{j2\pi p\tau_i(l)}{MT_s} \right)$$

with. The vector $w_i$ is additive white gaussian noise with zero mean and variance $\sigma^2 I_N$.

DFT-s-OFDM

The operations (1) and (2) explained above may be implemented to yield $N_D$ sub-symbols $x_i[v] = \mathcal{M}\left( c_i^{(v)} \right)$, $v \in [N_D - 1]$. Note that if the response signal does not contain any encoded data (e.g., payload), then all symbols may be considered as pilots and the encoding operation above is skipped. In this case, $N_P = M$ and $N_D = 0$.

These may be passed through a DFT block, the output of which reads $\tilde{x}_i(d_k) = \frac{1}{\sqrt{N_D}} \sum_{v=0}^{N_D-1} x_i[v] \exp\left( \frac{-j2\pi kv}{N_D} \right)$ which in matrix notation is:

$$\tilde{x}_i = D x_i \quad (5)$$

where $d_k \in D$, and $D = \{d_0, \ldots, d_{N_D-1}\}$ may denote the same data subcarriers set and the matrix D may have the entry

$$D(k, v) = \frac{1}{\sqrt{N_D}} \exp\left( \frac{-j2\pi kv}{N_D} \right), k = 1: N_D, v = 1: N_D.$$

Then, the vector $\tilde{x}_i$ may be interleaved with the pilot vector. The resulting vector m-th entry $\tilde{x}_i[m]$ is a pilot symbol if $m \in P$ and a data symbol if $m \in D$. Here, $P = \{p_0, \ldots, p_{N_P-1}\}$ and $D = \{d_0, \ldots, d_{N_D-1}\}$, $P \cup D = [M - 1]$, $P \cap D = \varnothing$, may be the subsets of pilot and data indexes, respectively, the same as in the CP-OFDM.

Finally, the resulting vector is converted to time-domain via inverse DFT of size M, the same as in CP-OFDM. The resulting vector $s_i$ may be prepended a $\mu$-sample long cyclic prefix (CP).

Each symbol $s_i$ in the B-long symbols frame may sent then by the AIoT device over a channel (e.g. UL channel) with response composed of L multipath components

$$g_i(\tau) = \sum_{l=0}^{L-1} h_i(l)\delta(\tau - \tau_i(l))$$

here $h_i(l)$ and $\tau_i(l)$ model the gain and delay of the $l$-th multipath component.

The reader UE may observe a response signal which is sampled at a rate $\dfrac{1}{T_s}$, and the CP samples are discarded.

The remaining samples may be collected in B vectors that are passed through an M-point DFT block, at the output of which the received vector is:

$$y_i = H_i \tilde{x}_i + w_i \quad (6)$$

where $i \in [B - 1]$ and the matrix $H_i \in \mathbb{C}^{M \times M}$ is diagonal, with diagonal entries:

$$H_i[m, m] = \frac{1}{M}\sum_{l=0}^{L-1} h_i(l) \exp\left(\frac{j2\pi p\tau_i(l)}{MT_s}\right)$$

.

The vector $w_i$ is additive white gaussian noise with zero mean and variance $\sigma^2 I_N$.

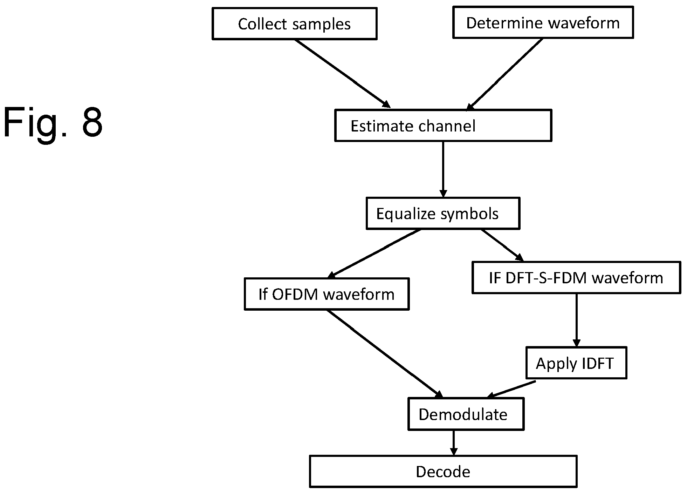

Fig. 8 shows a block diagram of a method for receiving, from an AIoT device, a response signal.

A reader UE may receive, from an AIoT device, a response signal over a channel. The reader UE may collect samples of the response signal. The samples of the response signal may comprise cyclic prefix samples and remaining samples. The reader UE may generate a first vector comprising the remaining samples. The reader UE may perform a digital Fourier transformation of the first vector to obtain a second vector $y_i$. The second vector $y_i$ may comprise data symbols and pilot symbols. The data symbols may be mapped to data subcarriers. The pilot symbols may be mapped to pilot subcarriers.

The reader UE may determine a waveform of the response signal. The reader UE may determine the waveform of the response signal based on information, for example configuration information, received from the gNB or from the AIoT device. The information may comprise an explicit indication of the waveform of the response signal. Alternatively, the information may comprise an implicit indication of the waveform of the response signal.

An implicit indication of the waveform of the response signal may comprise an AIoT device type. The reader UE may determine a waveform of the response signal based on a waveform of the activation signal and the AIoT device type. For example, an AIoT device type A or AIoT device type B device may use the same waveform for the activation signal and the response signal or a different waveform for the activation signal and the response signal.

The reader UE may estimate a channel response $H_i$ of the channel based on the pilot symbols.

The reader UE may equalize the data symbols based on the channel response $H_i$ (e.g., least square or minimum mean square error equalization).

The reader UE may determine that the waveform of the response signal is OFDM (e.g., CP-OFDM). The reader UE may demodulate the equalized data symbols to obtain demodulated and equalized data symbols. The reader UE may or may not decode the demodulated and equalized data symbols to obtain data. The reader UE may transmit a report signal comprising the decoded or not decoded, demodulated, inverse digital Fourier transformed and equalized data symbols.

Alternatively, the reader UE may determine that the waveform of the response signal is DFT-s-FDM. The reader UE may perform inverse digital Fourier transformation of the equalized data symbols (e.g., of size $N_D$) to obtain inverse digital Fourier transformed and equalized data symbols. The reader UE may demodulate the inverse digital Fourier transformed and equalized data symbols to obtain demodulated, inverse digital Fourier transformed and equalized data symbols. The reader UE may or may not decode the demodulated, inverse digital Fourier transformed and equalized data symbols to obtain data. The reader UE may transmit a report signal comprising the decoded or not decoded, demodulated, inverse digital Fourier transformed and equalized data symbols.

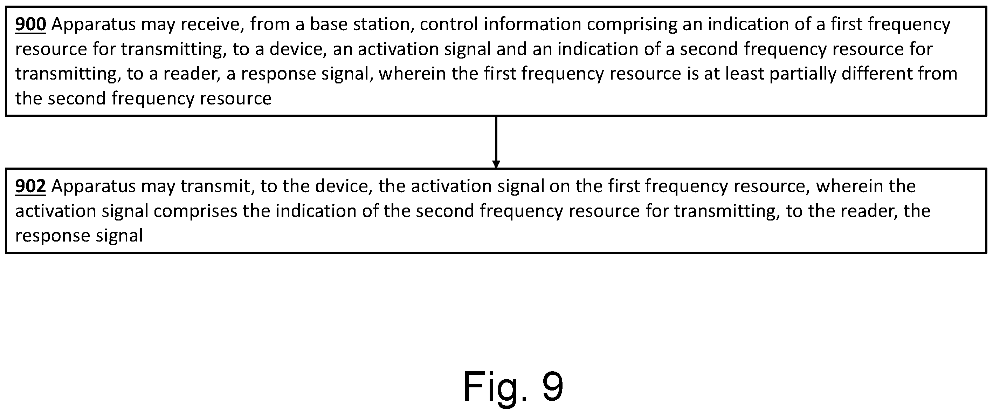

Fig. 9 shows a block diagram of a method for transmitting, to an AIoT device, an activation signal.

At step 900, an apparatus may receive, from a base station, control information comprising an indication of a first frequency resource for transmitting, to a device, an activation signal and an indication of a second frequency resource for transmitting, to a reader, a response signal, wherein the first frequency resource is at least partially different from the second frequency resource.

At step 902, the apparatus may transmit, to the device, the activation signal on the first frequency resource, wherein the activation signal comprises the indication of the second frequency resource for transmitting, to the reader, the response signal.

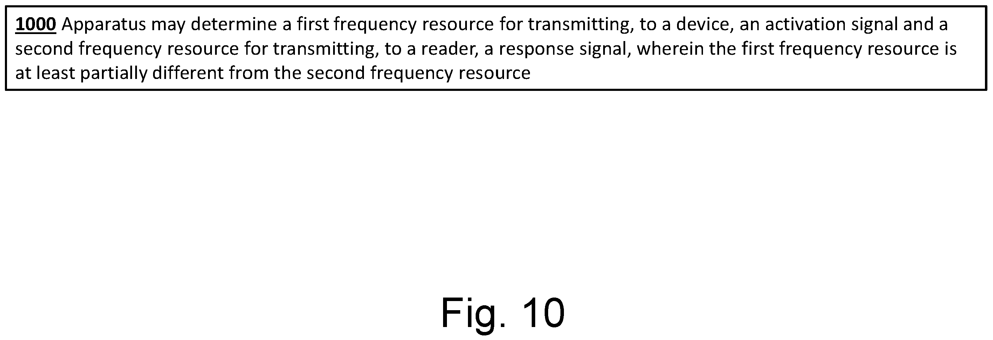

Fig. 10 shows a block diagram of a method for transmitting, to an AIoT device, an activation signal.

At step 1000, an apparatus may determine a first frequency resource for transmitting, to a device, an activation signal and a second frequency resource for transmitting, to a reader, a response signal, wherein the first frequency resource is at least partially different from the second frequency resource.

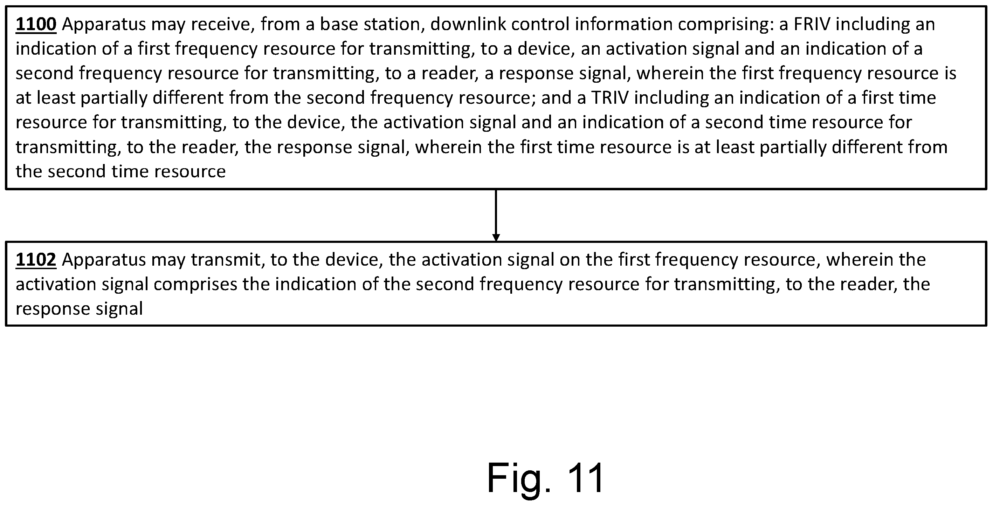

Fig. 11 shows a block diagram of a method for transmitting, to an AIoT device, an activation signal.

At step 1100, an apparatus may receive, from a base station, downlink control information comprising: a FRIV including an indication of a first frequency resource for transmitting, to a device, an activation signal and an indication of a second frequency resource for transmitting, to a reader, a response signal, wherein the first frequency resource is at least partially different from the second frequency resource; and a TRIV including an indication of a first time resource for transmitting, to the device, the activation signal and an indication of a second time resource for transmitting, to the reader, the response signal, wherein the first time resource is at least partially different from the second time resource.

At step 1102, the apparatus may transmit, to the device, the activation signal on the first frequency resource, wherein the activation signal comprises the indication of the second frequency resource for transmitting, to the reader, the response signal.

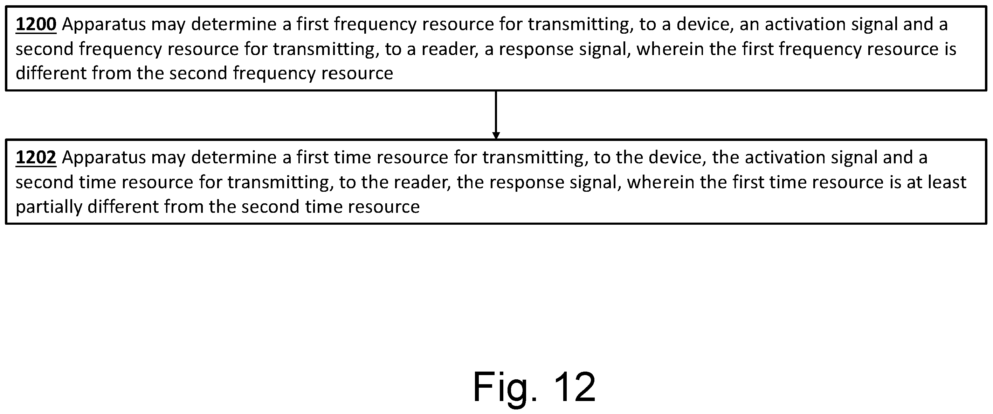

Fig. 12 shows a block diagram of a method for transmitting, to an AIoT device, an activation signal.

At step 1200, the apparatus may determine a first frequency resource for transmitting, to a device, an activation signal and a second frequency resource for transmitting, to a reader, a response signal, wherein the first frequency resource is different from the second frequency resource.

At step 1202, the apparatus may determine a first time resource for transmitting, to the device, the activation signal and a second time resource for transmitting, to the reader, the response signal, wherein the first time resource is at least partially different from the second time resource.

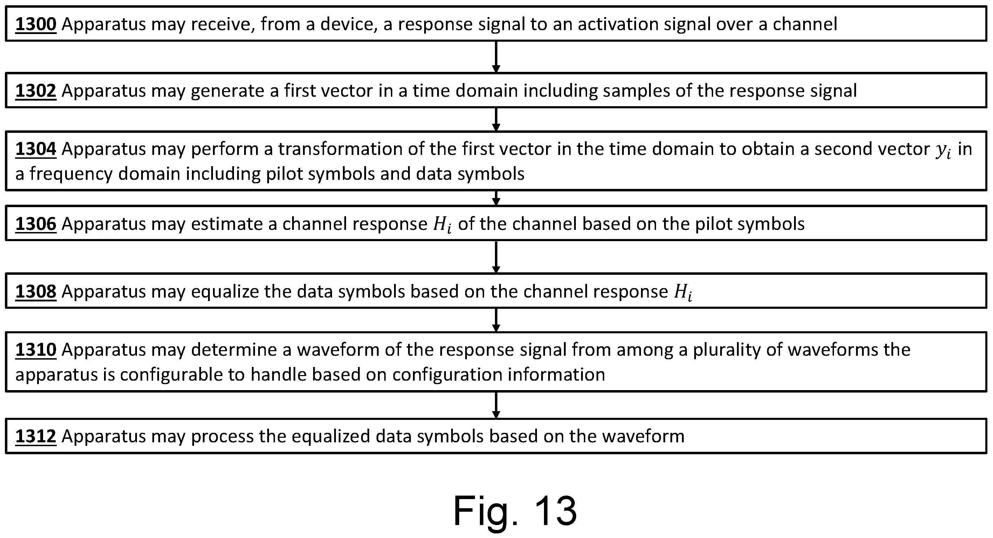

Fig. 13 shows a block diagram of a method for receiving, from an AIoT device, a response signal.

At step 1300, an apparatus may receive, from a device, a response signal to an activation signal over a channel.

At step 1302, the apparatus may generate a first vector in a time domain including samples of the response signal.

At step 1304, the apparatus may perform a transformation of the first vector in the time domain to obtain a second vector $y_i$ in a frequency domain including pilot symbols and data symbols.

At step 1306, the apparatus may estimate a channel response $H_i$ of the channel based on the pilot symbols.

At step 1308, the apparatus may equalize the data symbols based on the channel response $H_i$.

At step 1310, the apparatus may determine a waveform of the response signal from among a plurality of waveforms the apparatus is configurable to handle based on configuration information.

At step 1312, the apparatus may process the equalized data symbols based on the waveform.

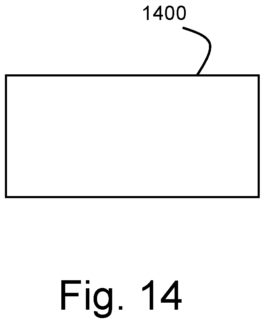

Fig. 14 shows a schematic representation of non-volatile memory media 1400 storing instructions which when executed by a processor allow the processor to perform one or more of the steps of the methods of Fig.

9 to Fig. 13.

It is noted that while the above describes example embodiments, there are several variations and modifications which may be made to the disclosed solution without departing from the scope of the present invention.

It will be understood that although the above concepts have been discussed in the context of a 5GS, one or more of these concepts may be applied to other cellular systems.

The embodiments may thus vary within the scope of the attached claims. In general, some embodiments may be implemented in hardware or special purpose circuits, software, logic or any combination thereof. For example, some aspects may be implemented in hardware, while other aspects may be implemented in firmware or software which may be executed by a controller, microprocessor or other computing device, although embodiments are not limited thereto. While various embodiments may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments may be implemented by computer software stored in a memory and executable by at least one data processor of the involved entities or by hardware, or by a combination of software and hardware. Further in this regard it should be noted that any procedures, e.g., as in Fig. 9 to Fig. 13, may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Alternatively or additionally some embodiments may be implemented using circuitry. The circuitry may be configured to perform one or more of the functions and/or method steps previously described. That circuitry may be provided in the base station and/or in the communications device.

As used in this application, the term "circuitry" may refer to one or more or all of the following:

(a) hardware-only circuit implementations (such as implementations in only analogue and/or digital circuitry);

(b) combinations of hardware circuits and software, such as:

(i) a combination of analogue and/or digital hardware circuit(s) with software/firmware and

(ii) any portions of hardware processor(s) with software (including digital signal processor(s)), software, and memory(ies) that work together to cause an apparatus, such as the communications device or base station to perform the various functions previously described; and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example integrated device.

The foregoing description has provided by way of exemplary and non-limiting examples a full and informative description of some embodiments However, various modifications and adaptations may become apparent to those skilled in the relevant arts in view of the foregoing description, when read in conjunction with the accompanying drawings and the appended claims. However, all such and similar modifications of the teachings will still fall within the scope as defined in the appended claims.

**Claims**

1. An apparatus comprising:

means for receiving (1300), from a device, a response signal to an activation signal over a channel;
means for generating (1302) a first vector in a time domain including samples of the response signal;
means for performing (1304) a transformation of the first vector in the time domain to obtain a second vector $y_i$ in a frequency domain including pilot symbols and data symbols;
means for estimating (1306) a channel response $H_i$ of the channel based on the pilot symbols;
means for equalizing (1308) the data symbols based on the channel response $H_i$;
means for determining (1310) a waveform of the response signal, from among a plurality of waveforms the apparatus is configurable to handle, based on configuration information; and
means for processing (1312) the equalized data symbols based on the determined waveform.

2. The apparatus of claim 1, comprising:

means for sampling the response signal to generate cyclic prefix samples and remaining samples; and
means for deleting the cyclic prefix samples; and
wherein the first vector includes the remaining samples.

3. The apparatus of claim 1 or claim 2, wherein the means for determining (1310) a waveform of the response signal comprises:

means for determining that a waveform of the response signal comprise a first waveform; and
wherein the means for processing (1312) the data symbols based on the determined waveform comprises:
means for demodulating the equalized data symbols to obtain demodulated and equalized data symbols.

4. The apparatus of claim 3, wherein the first waveform comprises orthogonal frequency division multiplexing.

5. The apparatus of claim 4, wherein the first waveform comprises cyclic prefix orthogonal frequency division multiplexing.

6. The apparatus of claim 1 or claim 2, wherein the means for determining (1310) a waveform of the response signal comprises:

means for determining that a waveform of the response signal is a second waveform; and
wherein the means for processing (1312) the equalized data symbols based on the determined waveform comprises:

means for performing an inverse digital Fourier transformation of the equalized data symbols to obtain inverse digital Fourier transformed and equalized data symbols;

and

means for demodulating the inverse digital Fourier transformed and equalized data symbols to obtain demodulated, inverse digital Fourier transformed and equalized data symbols.

7. The apparatus of claim 6, wherein the second waveform comprises digital Fourier transform spread frequency division multiplexing.

8. The apparatus of any of claims 3 to 7, wherein the means for processing (1312) the equalized data symbols based on the determined waveform comprises:

means for decoding the demodulated and equalized data symbols to obtain data; or means for decoding the demodulated, inverse digital Fourier transformed and equalized data symbols to obtain data.

9. The apparatus of any of claim 1 to 8, wherein the configuration information is received from a base station; or wherein the configuration information is received from the device.

10. The apparatus of claim 9, wherein the configuration information comprises an explicit indication of the waveform of the response signal; or wherein the configuration information comprises an implicit indication of the waveform of the response signal.

11. The apparatus of claim 10, wherein the implicit indication of the waveform of the response signal comprises a device type.

12. The apparatus of any of claims 1 to 11, wherein the apparatus is a reader.

13. The apparatus of claim 12, wherein the reader is a user equipment or a base station.

14. The apparatus of any of claims 1 to 13, wherein the transformation is a digital Fourier transformation.

15. A method comprising:

receiving (1300), from a device, a response signal to an activation signal over a channel; generating (1302) a first vector in a time domain including samples of the response signal; performing (1304) a transformation of the first vector in the time domain to obtain a second vector $y_i$ in a frequency domain including pilot symbols and data symbols;

estimating (1306) a channel response $H_i$ of the channel based on the pilot symbols; equalizing (1308) the data symbols based on the channel response $H_i$; determining (1310) a waveform of the response signal, from among a plurality of waveforms, the apparatus is configurable to handle based on configuration information; and processing (1312) the equalized data symbols based on the determined waveform.

# Fig. 1

Fig. 2

Fig. 3

EP 4 601 251 A1

```
┌────────┐              ┌──────────┐            ┌────────┐
│ gNB A  │              │ Activator│            │  AIoT  │
└───┬────┘              └────┬─────┘            └───┬────┘
    │   1) Resource allocation │                    │
    │ ─────────────────────────►                    │
    │                          │  2) Activation     │
    │                          │ ╌╌╌╌╌╌╌╌╌╌╌╌╌╌╌╌╌╌►
    │                          │      signal         │
    │      3) Response signal  │                    │
    │ ◄╌╌╌╌╌╌╌╌╌╌╌╌╌╌╌╌╌╌╌╌╌╌╌╌╌╌╌╌╌╌╌╌╌╌╌╌╌╌╌╌╌╌╌╌│
    │                          │                    │
                              (a)
```

```
┌────────┐              ┌──────────┐            ┌────────┐
│ gNB A  │              │   AIoT   │            │ Reader │
└───┬────┘              └────┬─────┘            └───┬────┘
    │    1) Activation signal  │                    │
    │ ─────────────────────────►                    │
    │                          │  2) Response signal │
    │                          │ ───────────────────►
    │       3) Response signal │                    │
    │ ◄────────────────────────│                    │
    │                          │                    │
                              (b)
```

# Fig. 4

```
        ┌────────┐           ┌──────────┐         ┌────────┐          ┌────────┐
        │ gNB A  │           │ Activator│         │  AIot  │          │ Reader │
        └───┬────┘           └────┬─────┘         └───┬────┘          └───┬────┘
            │ 1) Resource allocation │                │                   │
            │ ───────────────────────►                │                   │
            │                        │  2) Activation │                   │
            │                        │ ──────────────►│                   │
            │                        │     signal     │  3) Response signal│
            │                        │                │ ──────────────────►
            │                 4) Report signal        │                   │
            │ ◄───────────────────────────────────────────────────────────│
            │                        │                │                   │
                                   (c)
```

Fig. 5

DL carrier ——————
UL carrier ············
AIoT carrier — · — ·

gNB A            Activator            AIoT

Option 1

1) Resource allocation
2) Activation signal
3) Response signal

Option 2

1) Resource allocation
2) Activation signal
3) Response signal

Option 3

1) Resource allocation
2) Activation signal
3) Response signal

EP 4 601 251 A1

Fig. 6

# Fig. 7a

| DL carrier | —————— |
| UL carrier | ·············· |
| AIoT carrier | — · — · |

gNB A  Activator  AIoT  Reader

**Option 1**
1) Resource allocation
2) Activation signal
3) Response signal
4) Report signal

**Option 2**
1) Resource allocation
2) Activation signal
3) Response signal
4) Report signal

**Option 3**
1) Resource allocation
2) Activation signal
3) Response signal
4) Report signal

# Fig. 7b

DL carrier ——————
UL carrier ·············
AIoT carrier — · — ·

**Option 4**

1) Resource allocation

2) Activation signal

3) Response signal

4) Report signal

**Option 5**

1) Resource allocation

2) Activation signal

3) Response signal

4) Report signal

**Option 6**

1) Resource allocation

2) Activation signal

3) Response signal

4) Report signal

**Option 7**

1) Resource allocation

2) Activation signal

3) Response signal

4) Report signal

Fig. 8

Collect samples → Estimate channel
Determine waveform → Estimate channel
Estimate channel → Equalize symbols
Equalize symbols → IF DFT-S-FDM waveform → Apply IDFT → Demodulate
Equalize symbols → If OFDM waveform → Demodulate
Demodulate → Decode

900 Apparatus may receive, from a base station, control information comprising an indication of a first frequency resource for transmitting, to a device, an activation signal and an indication of a second frequency resource for transmitting, to a reader, a response signal, wherein the first frequency resource is at least partially different from the second frequency resource

902 Apparatus may transmit, to the device, the activation signal on the first frequency resource, wherein the activation signal comprises the indication of the second frequency resource for transmitting, to the reader, the response signal

# Fig. 9

EP 4 601 251 A1

**1000** Apparatus may determine a first frequency resource for transmitting, to a device, an activation signal and a second frequency resource for transmitting, to a reader, a response signal, wherein the first frequency resource is at least partially different from the second frequency resource

# Fig. 10

EP 4 601 251 A1

**1100** Apparatus may receive, from a base station, downlink control information comprising: a FRIV including an indication of a first frequency resource for transmitting, to a device, an activation signal and an indication of a second frequency resource for transmitting, to a reader, a response signal, wherein the first frequency resource is at least partially different from the second frequency resource; and a TRIV including an indication of a first time resource for transmitting, to the device, the activation signal and an indication of a second time resource for transmitting, to the reader, the response signal, wherein the first time resource is at least partially different from the second time resource

**1102** Apparatus may transmit, to the device, the activation signal on the first frequency resource, wherein the activation signal comprises the indication of the second frequency resource for transmitting, to the reader, the response signal

Fig. 11

EP 4 601 251 A1

**1200** Apparatus may determine a first frequency resource for transmitting, to a device, an activation signal and a second frequency resource for transmitting, to a reader, a response signal, wherein the first frequency resource is different from the second frequency resource

**1202** Apparatus may determine a first time resource for transmitting, to the device, the activation signal and a second time resource for transmitting, to the reader, the response signal, wherein the first time resource is at least partially different from the second time resource

# Fig. 12

EP 4 601 251 A1

**1300** Apparatus may receive, from a device, a response signal to an activation signal over a channel

**1302** Apparatus may generate a first vector in a time domain including samples of the response signal

**1304** Apparatus may perform a transformation of the first vector in the time domain to obtain a second vector $y_i$ in a frequency domain including pilot symbols and data symbols

**1306** Apparatus may estimate a channel response $H_i$ of the channel based on the pilot symbols

**1308** Apparatus may equalize the data symbols based on the channel response $H_i$

**1310** Apparatus may determine a waveform of the response signal from among a plurality of waveforms the apparatus is configurable to handle based on configuration information

**1312** Apparatus may process the equalized data symbols based on the waveform

# Fig. 13

EP 4 601 251 A1

1400

Fig. 14

Europäisches
Patentamt

European
Patent Office

Office européen
des brevets

## EUROPEAN SEARCH REPORT

**Application Number**

EP 25 15 5103

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2020/106655 A1 (GULATI KAPIL [US] ET AL) 2 April 2020 (2020-04-02) * paragraphs [0078], [0075], [0080], [0040] * | 1-15 | INV. H04L25/03 H04L25/02 |
| Y | CATT: "Ambient IoT in Rel-19 AI: 9.1.1.4", 3GPP DRAFT; RP-233014, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. TSG RAN, no. Edinburgh, Scotland; 20231211 - 20231215 10 December 2023 (2023-12-10), XP052573272, Retrieved from the Internet: URL:https://ftp.3gpp.org/Meetings_3GPP_SYNC/RAN/Docs/RP-233014.zip RP-233014_Rel-19_Ambient IoT_v2.pdf [retrieved on 2023-12-10] * pages 14,15,16 * | 1-15 | |

**TECHNICAL FIELDS SEARCHED (IPC)**

H04L

The present search report has been drawn up for all claims

| Place of search | Date of completion of the search | Examiner |
|---|---|---|
| Munich | 12 February 2025 | Belloni, Paolo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 15 5103

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2025

| Patent document cited in search report | Publication date | Patent family member(s) | | Publication date |
|---|---|---|---|---|
| US 2020106655 A1 | 02-04-2020 | US | 2020106655 A1 | 02-04-2020 |
| | | WO | 2020068488 A1 | 02-04-2020 |

EPO FORM P0459

For more details about this annex : see Official Journal of the European Patent Office, No. 12/82